# EUROPEAN PATENT APPLICATION

(11) **EP 2 728 660 A1**
(43) Date of publication of application: **07.05.2014**
(21) Application number: 12190671.3
(22) Date of filing: 30.10.2012
(51) Int. Cl.: H01M 10/0525, H01M 10/0567, H01M 10/0568, H01M 10/0569, H01M 4/38, H01M 4/48, H01M 4/485, H01M 4/505, H01M 4/525

(54) **Lithium ion secondary battery comprising a silicon anode**

(71) Applicant: BASF SE, 67056 Ludwigshafen (DE)
(72) Inventor: The designation of the inventor has not yet been filed

(57) **Abstract**

A lithium ion secondary battery comprising:
(i) a cathode comprising a cathode active material that can reversibly occlude and release lithium ions wherein the upper cut-off voltage for the cathode during charging against Li/Li⁺ is of at least 4.4 V, preferably of at least 4.5 V and more preferred of at least 4.6 V;
(ii) an anode comprising an anode active material selected from silicon; and
(iii) a non-aqueous electrolyte comprising at least one lithium salt and at least one non-aqueous organic solvent selected from fluorinated carbonates.

## Description

### 1. FIELD OF THE INVENTION

The present invention relates to a lithium ion secondary battery with improved capacity retention property, faradaic efficiency and durability.

### 2. BACKGROUND

High voltage lithium ion batteries and high energy lithium-ion batteries attracted high attention as potential power sources for electric vehicles due to the high energy density of all the commercialized rechargeable batteries.

Lithium cobalt phosphate (LiCoPO₄) with an olivine structure possesses high operating voltage (red-ox potential of 4.8 V vs. Li/Li⁺), flat voltage profile, and a high theoretical capacity of about 170 mAh/g (Phadhi et al., J. Electrochem. Soc., 1997, 144, 1188). However, LiCoPO₄ has shown a fast fading of discharge capacity upon charge-discharge cycling (Wolfenstine et al., 2005; Bramnik et al., 2004; Jin et al., 2008; Li et al., 2009; Wang et al., 2010; Tan et al., 2010). LiNi_{0.5}Mn_{1.5}O₄ with spinel structure possesses high operating voltage (red-ox potential of 4.7 V vs. Li/Li⁺), theoretical capacity of about 147 mAh/g and high rate capability, too. However, LiNi_{0.5}ivin_{1.5}O₄/graphite cells exhibit severe capacity fading (Lee et al., Electrochem. Comm., 2007, 9, 801-806). Transition metal oxides comprising Ni, Co and Mn with layer structure having higher energy density (so called HE-NCMs) than usual NCMs have operating voltage of about 3.3 to 3.8 V against Li/Li⁺ like usual NCMs, but high cut off voltages have to be used for charging HE-NCMS to actually accomplish full charging and to benefit from their higher energy density.

Besides graphite lithium alloys are very promising anode materials for the high voltage Li-ion cells, since they deliver the highest specific capacity in Li batteries. Silicon nanoparticles combined with LiNi_{0.5}Mn_{1.5}O₄ resulted in high voltage cell which exhibited marked capacity fading during 30 cycles (J. Arrebola et al., Electrochem. Comm., 2009, 11, 1061-1064).

Use of fluorinated ethylene carbonate (FEC) as a component in electrolyte solutions has been reported. As particularly reported, the addition of FEC improves discharge capacity retention and coulombic efficiency of Si|Li half-cell (Choi et al., J. Power Sources, 2006, 161, 1254-1259 and Nakai et al., J. Electrochem. Soc., 2011, 158, A798-A801), and of graphite/Li cells (McMillan et al., J. Power Sources, 1999, 81-82, 20-26). As further reported, the addition of FEC improves the capacity retention of LiMn₂O₄/graphite Li-ion cells at elevated temperature (Ryou et al., Electrochemica Acta, 2010, 55, 2073-2077).

An object of the present invention was to provide an electrolyte for high voltage and high energy Li-ion secondary batteries comprising silicon as anode active material which allows long operation of the batteries and high voltage Li-ion secondary batteries comprising silicon as anode active material with prolonged cycle stability and life time.

### 3. SUMMARY OF INVENTION

In one aspect, the present invention thus provides a lithium ion secondary battery comprising:
(i) a cathode comprising a cathode active material that can reversibly occlude and release lithium ions wherein the upper cut-off voltage for the cathode during charging against Li/Li⁺ is of at least 4.4 V, preferably of at least 4.5 V and more preferred of at least 4.6 V;
(ii) an anode comprising an anode active material selected from silicon; and
(iii) a non-aqueous electrolyte comprising at least one lithium salt and at least one non-aqueous organic solvent selected from fluorinated carbonates.

In another aspect, the present invention relates to the use of electrolyte (iii) in lithium ion secondary batteries comprising a cathode active material that can reversibly occlude and release lithium ions wherein the upper cut-off voltage for the cathode during charging against Li/Li⁺ is of at least 4.4 V and an anode comprising an anode active material selected from silicon.

### 4. BRIEF DESCRIPTION OF THE FIGURES

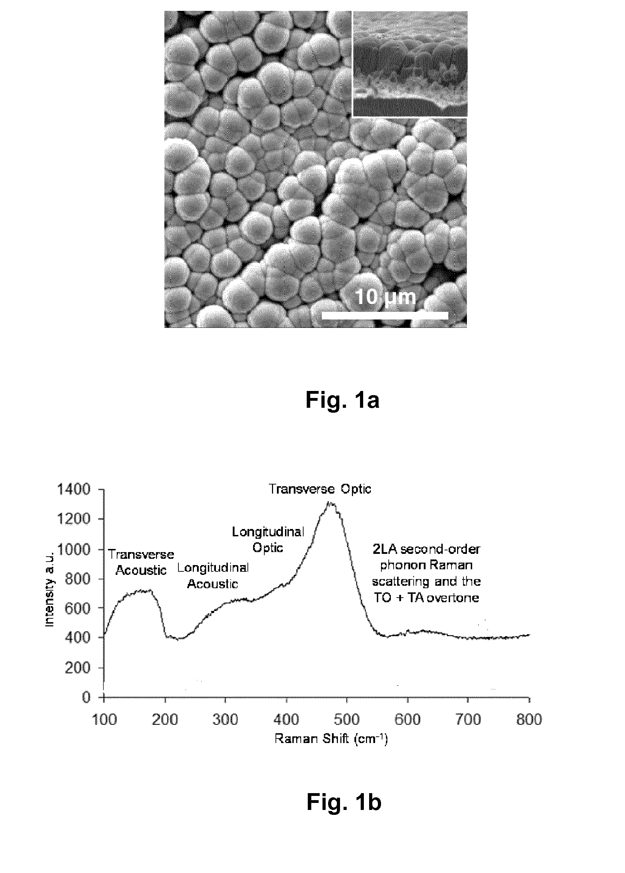

Figs. 1 a and 1 b show SEM image (1 a) and Raman spectrum (1 b) of a-Si thin film electrode.

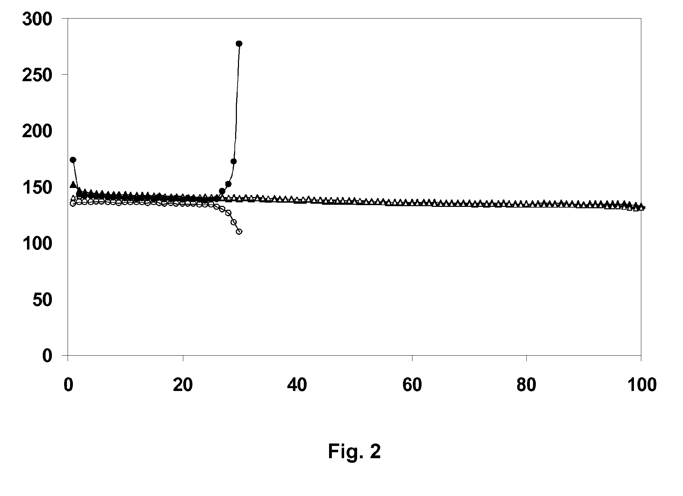

Fig. 2 shows curves of charge and discharge capacity (referred to the cathode) vs. cycle number obtained upon galvanostatic cycling (C/8 rates) of LiNi_{0.5}Mn_{1.5}O₄/Si cells with 1 M LiPF₆/EC-DMC solution (open and full circles) and 1 M LiPF₆/FEC-DMC solution (open and full triangles) at 30 °C. The x-axis displays the cycle number, the y-axis the capacity [mAh/g].

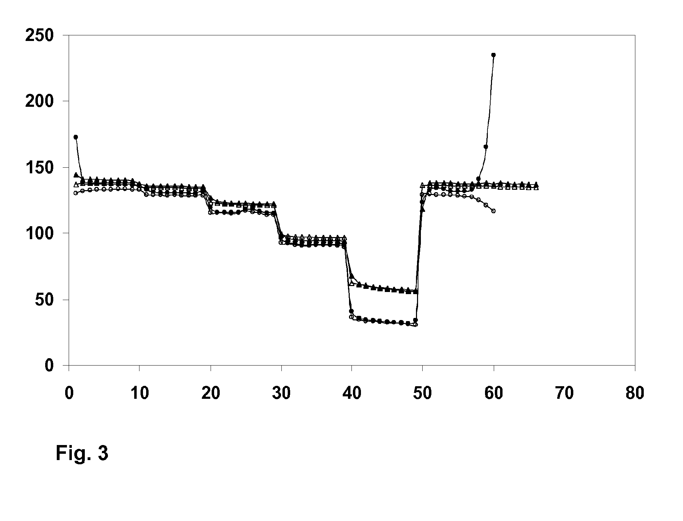

Fig. 3 shows charge and discharge capacity (referred to the cathode) vs. cycle number obtained upon galvanostatic cycling at current rates of C/8, C/4, C/2, 1C, 2C and C/8 of LiNi_{0.5}Mn_{1.5}O₄/Si cells with 1 M LiPF₆/EC-DMC electrolyte solution (open and full circles) and 1 M LiPF₆/FEC-DMC electrolyte solution (open and full triangles) at 30 °C. The x-axis displays the cycle number, the y-axis the capacity [mAh/g].

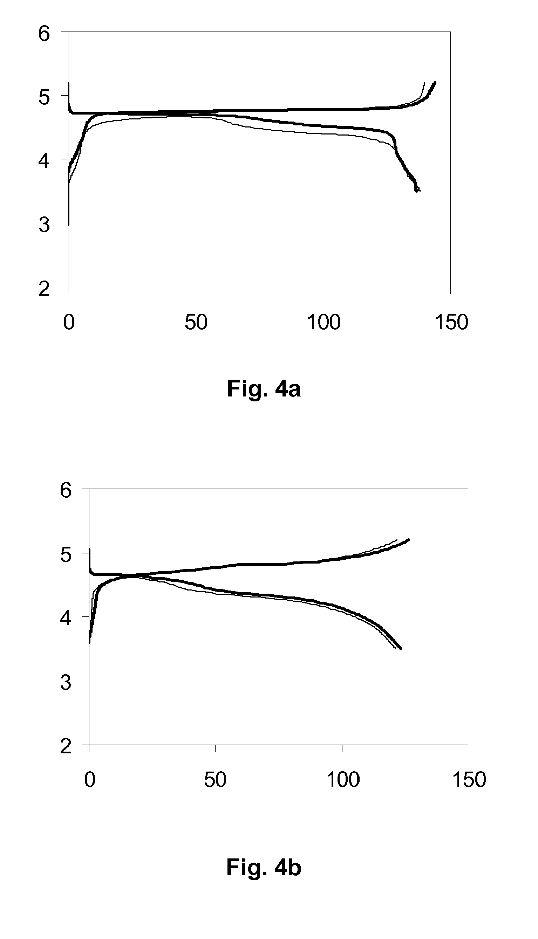

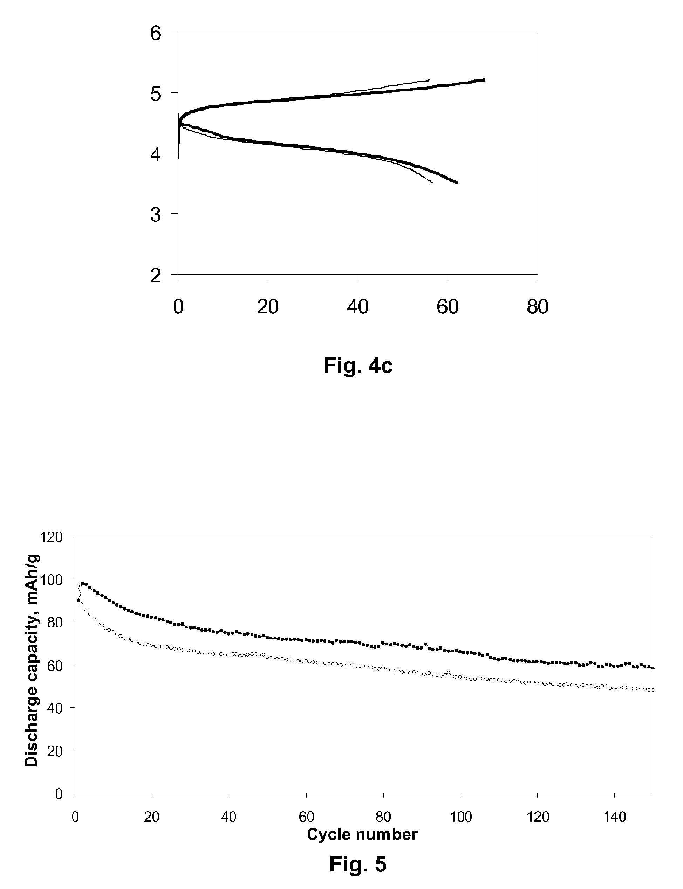

Fig. 4a to 4c show charge/discharge voltage profile of LiNi_{0.5}Mn_{1.5}O₄/Si cells with 1 M LiPF₆/FEC-DMC electrolyte solution measured at current rates of C/8 (Fig 4a), C/2 (Fig 4b) and 2C (Fig 4c) at 30 °C. The x-axis displays capacity [mAh/g], the y-axis the voltage [V].
Fig. 5 shows the discharge capacity vs. cycle number obtained upon galvanostatic cycling (C/8 rate) of LiCoPO₄/Si cells at 30°C. Electrolyte solution compositions used were 1 M LiPF₆/FEC-DMC 1:4 without TMB (open circles) and with the addition of 1 % TMB (full circles). The x-axis displays the cycle number, the y-axis the capacity [mAh/g].

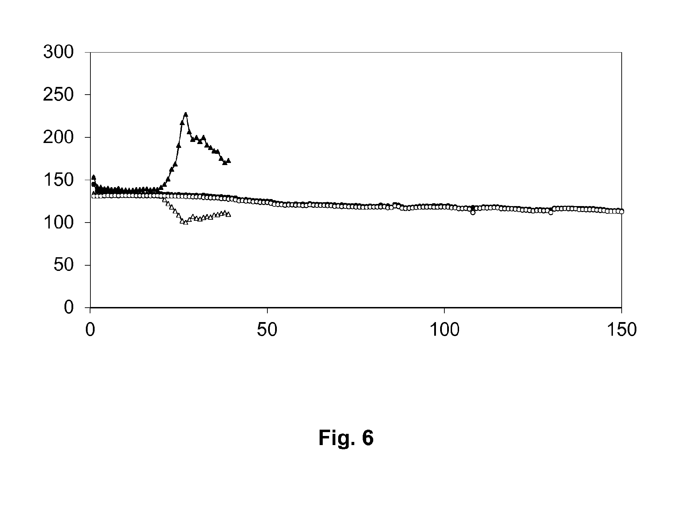

Fig. 6 shows curves of charge and discharge capacity (referred to the cathode) vs. cycle number obtained upon galvanostatic cycling (C/8 rates) of LiNi_{0.5}Mn_{1.5}O₄/Si cells with 1 M LiPF₆/EC-DMC solution (open and full triangles) and 1 M LiPF₆/FEC-DMC solution (open and full circles) at 30 °C. The surface density of the Si-film on the anode was 1.3 mg/cm² and thickness was about 6 µm. The x-axis displays the cycle number, the y-axis the capacity [mAh/g].

### 5. DETAILED DESCRIPTION OF THE INVENTION

The present invention relates to a lithium ion secondary battery comprising:
(i) a cathode comprising a cathode active material that can reversibly occlude and release lithium ions wherein the upper cut-off voltage for the cathode during charging against Li/Li⁺ is of at least 4.4 V, preferably of at least 4.5 V and more preferred of at least 4.6 V;
(ii) an anode comprising an anode active material selected from silicon; and
(iii) a non-aqueous electrolyte comprising at least one lithium salt and at least one non-aqueous organic solvent selected from fluorinated carbonates.

In another aspect, the present invention relates to the use of electrolyte (iii) in lithium ion secondary batteries comprising a cathode active material that can reversibly occlude and release lithium ions wherein the upper cut-off voltage for the cathode during charging against Li/Li⁺ is of at least 4.4 V and an anode comprising an anode active material selected from silicon.

The inventive secondary lithium ion batteries comprising silicon as anode active material and the cathode active material as defined above and comprising fluorinated carbonate-based electrolyte solutions have excellent performance in term of cycle life, charge-discharge efficiency and rate capability. They show a significantly better capacity retention and higher coulomb efficiency, than similar secondary lithium ion batteries comprising only the non-fluorinated carbonate-based electrolyte solution as shown in the experiments.

A further improvement of the capacity retention and coulomb efficiency of the inventive lithium ion secondary batteries comprising LiCoPO₄ is achieved by addition of an optionally fluorinated boroxine of formula (IV) as defined below. The use of the inventive electrolyte comprising at least one lithium salt, at least one non-aqueous organic solvent selected from fluorinated carbonates and at least one optionally fluorinated boroxine of formula (IV) in the lithium ion batteries comprising a cathode active material selected from LiCoPO₄ and an anode active material selected from silicon leads to better capacity retention of such batteries.

In the following the invention is described in detail.

In the context of the present invention the term "lithium ion battery" means a rechargeable electrochemical cell wherein during discharge lithium ions move from the negative electrode (anode) to the positive electrode (cathode) and during charge the lithium ions move from the positive electrode to the negative electrode, i.e. the charge transfer is performed by lithium ions. Usually lithium ion batteries comprise a cathode containing as cathode active material a lithium ion-containing transition metal compound, for example transition metal oxide compounds with layer structure like LiCoO₂, LiNiO₂, and LiMnO₂, or transition metal phosphates having olivine structure like LiFePO₄ and LiMnPO₄, or lithium-manganese spinels which are known to the person skilled in the art in lithium ion battery technology.

The inventive lithium ion secondary battery comprises a cathode comprising a cathode active material that can reversibly occlude and release lithium ions wherein the upper cut-off voltage against Li/Li⁺ for the lithium ion secondary battery during charging is of at least 4.4 V, preferably of at least 4.5 V, more preferred of at least 4.6 V, even more preferred of at least 4.7 V and most preferred of at least 4.8 V. The term "upper cut-off voltage against Li/Li⁺ during charging" of lithium ion secondary battery means the voltage of the cathode of the inventive lithium ion secondary battery against a Li/Li⁺ reference anode which constitute the upper limit of the voltage at which the Li-ion battery is charged.

Examples of cathode active materials which may be used according to the present invention are LiCoPO₄, transition metal oxides with layer structure having the general formula (I) Li_{(1+y)}[NiₐCo_{b}Mn_{c}]_{(1-y)}O₂₊ₑ wherein y is 0 to 0.3, a, b and c may be same or different and are independently 0 to 0.8 and wherein a + b + c = 1 and -0.1 ≤ e ≤ +0.1, and manganese-containing spinels of general formula (II) Li₁₊ₜM₂₋ₜO_{4-d} wherein d is 0 to 0.4, t is 0 to 0.4 and M is Mn and at least one further metal selected from the group consisting of Co and Ni.

In one preferred embodiment the cathode active material is selected from LiCoPO₄. The cathode containing LiCoPO₄ as cathode active material may also be referred to as LiCoPO₄ cathode. The LiCoPO₄ may be doped with Fe, Mn, Ni, V, Mg, Al, Zr, Nb, TI, Ti, K, Na, Ca, Si, Sn, Ge, Ga, B, As, Cr, Sr, or rare earth elements, i.e., a lanthanide, scandium and yttrium. LiCoPO₄ with olivine structure is particularly suited according the present invention due to its high operating voltage (red-ox potential of 4.8 V vs. Li/Li⁺), flat voltage profile and a high theoretical capacity of about 170mAh/g. Preferably the cathode comprises a LiCoPO₄/C composite material. The preparation of a suited cathode comprising a LiCoPO₄/C composite material is described in Markevich et al., Electrochem. Comm., 2012, 15, 22-25.

In another preferred embodiment of the present invention the cathode active material is selected from transition metal oxides with layer structure having the general formula (I) Li_{(1+y)}[NiₐCo_{b}Mn_{c}]_{(1-y)}O₂₊ₑ wherein y is 0 to 0.3, preferably 0.05 to 0.2; a, b and c may be same or different and are independently 0 to 0.8 wherein a + b + c = 1; and -0.1 ≤ e ≤ 0.1. Preferred are transition metal oxides with layer structure having the general formula (I) Li_{(1+y)}[NiₐCo_{b}Mn_{c}]_{(1-y)}O₂₊ₑ wherein y is 0.05 to 0.3, a = 0.2 to 0.5, b = 0 to 0.3 and c = 0.4 to 0.8 wherein a + b + c = 1; and -0.1 ≤ e ≤ 0.1. In one embodiment of the present invention, manganese-containing transition metal oxides with layer structure are selected from those in which [NiₐCo_{b}Mn_{c}] is selected from Ni_{0.33}Co₀Mn_{0.66}, Ni_{0.25}Co₀Mn_{0.75}, Ni_{0.35}Co_{0.15}Mn_{0.5}, Ni_{0,21}Co₀,₀₈Mn_{0,71} and Ni_{0,22}Co_{0,12}Mn_{0,66}, in particular preferred are Ni_{0,21}Co_{0,08}Mn_{0,71} and Ni_{0,22}Co_{0,12}Mn_{0,66}. It is preferred that the transition metal oxides of general formula (I) do not contain further cations or anions in significant amounts. The transition metal oxides of general formula (I) are also called High Energy NCM (HE-NCM) since they have higher energy densities than usual NCMs. Both HE-NCM and NCM have operating voltage of about 3.3 to 3.8 V against Li/Li⁺, but high cut off voltages have to be used for charging HE-NCMS to actually accomplish full charging and to benefit from their higher energy density.

According to a further preferred embodiment of the present invention the cathode active material is selected from manganese-containing spinels of general formula (II) Li₁₊ₜM₂₋ₜO_{4-d} wherein d is 0 to 0.4, t is 0 to 0.4 and M is Mn and at least one further metal selected from the group consisting of Co and Ni. An example of a suited manganese-containing spinel of general formula (II) is LiNi_{0,5}Mn_{1,5}O_{4-d}. It is preferred that the transition metal oxides of general formula (I) do not contain further cations or anions in significant amounts.

Many elements are ubiquitous. For example, sodium, potassium and chloride are detectable in certain very small proportions in virtually all inorganic materials. In the context of the present invention, proportions of less than 0.5% by weight of cations or anions are disregarded, i.e. amounts of cations or anions below 0.5% by weight are regarded as non-significant. Any lithium ion-containing transition metal oxide comprising less than 0.5% by weight of sodium is thus considered to be sodium-free in the context of the present invention. Correspondingly, any lithium ion-containing mixed transition metal oxide comprising less than 0.5% by weight of sulfate ions is considered to be sulfate-free in the context of the present invention.

According to another embodiment of the present invention the cathode active material is selected from materials which allow during discharge at a rate of C/20 to use at least 50 % of the capacity of the lithium ion secondary battery at a voltage against Li/Li⁺ of at least 4.2 V, preferably of at least 4.3 V, more preferred of at least 4.4 V, even more preferred of at least 4.5 V and most preferred of at least 4.6 V. Examples of such cathode active materials are LiCoPO₄ and the manganese-containing spinels of general formula (II) as described above.

The cathode may further comprise electrically conductive materials like electrically conductive carbon and may further comprise usual components like binders. Compounds suited as electrically conductive materials and binders are known to the person skilled in the art. For example, the cathode may comprise carbon in a conductive polymorph, for example selected from graphite, carbon black, carbon nanotubes, graphene or mixtures of at least two of the aforementioned substances. In addition, the cathode may comprise one or more binders, for example one or more organic polymers like polyethylene, polyacrylonitrile, polybutadiene, polypropylene, polystyrene, polyacrylates, polyvinyl alcohol, polyisoprene and copolymers of at least two comonomers selected from ethylene, propylene, styrene, (meth)acrylonitrile and 1,3-butadiene, especially styrene-butadiene copolymers, and halogenated (co)polymers like polyvinlyidene chloride, polyvinly chloride, polyvinyl fluoride, polyvinylidene fluoride (PVdF), polytetrafluoroethylene, copolymers of tetrafluoroethylene and hexafluoropropylene, copolymers of tetrafluoroethylene and vinylidene fluoride and polyacrylnitrile.

Furthermore, the cathode may comprise a current collector which may be a metal wire, a metal grid, a metal web, a metal sheet, a metal foil or a metal plate. A suited metal foil is aluminum foil.

According to one embodiment of the present invention the cathode has a thickness of from 25 to 200 µm, preferably of from 30 to 100 µm, based on the whole thickness of the cathode without the thickness of the current collector.

According to the present invention electrolyte (iii) functions as a medium that transfers lithium ions participating in the electrochemical reaction taking place in the battery. The lithium salt(s) present in the electrolyte are usually solvated in the non-aqueous organic solvent. Electrolyte (iii) is also referred to as electrolyte solution according to the present invention. Organic solvents used in lithium ion secondary batteries, in general, and in the secondary battery of the present invention usually have a high dielectric constant and a low viscosity, and therefore increase ionic dissociation by promoting ionic conductance.

Electrolyte (iii) comprises at least one fluorinated carbonate. The at least one fluorinated carbonate is usually selected from cyclic and linear carbonates which are partially or fully fluorinated and mixtures thereof. Examples of linear fluorinated carbonates are partially or fully fluorinated dimethyl carbonate, diethyl carbonate, dipropyl carbonate, methylpropyl carbonate, ethylpropyl carbonate and ethylmethyl carbonate. Examples of cyclic fluorinated carbonates are partially or fully fluorinated ethylene carbonate and propylene carbonate.

Partially fluorinated means, that only a part of the substitutable hydrogen atoms of the carbonate is substituted by F, totally fluorinated means, that all substitutable hydrogen atoms of the carbonate are substituted by F. Depending on the respective molecule the partially or fully fluorinated dimethyl carbonate, diethyl carbonate, dipropyl carbonate, methylpropyl carbonate, ethylpropyl carbonate, and ethylmethyl carbonate, ethylene carbonate, or propylene carbonate may be substituted with 1, 2, 3, 4, 5, 6, 7, 8, 9, 10, 11, 12, 13, or 14 fluorine atoms. Preferably the fluorinated carbonates are selected from mono-, di-, tri-, tetra-, penta-, or hexa- fluorinated dimethyl carbonate, diethyl carbonate, dipropyl carbonate, methylpropyl carbonate, ethylpropyl carbonate, ethylmethyl carbonate, ethylene carbonate, propylene carbonate, and mixtures thereof.

Concrete examples of fluorinated dimethyl carbonates are fluoromethyl methyl carbonate, difluoromethyl methyl carbonate, trifluoromethyl methyl carbonate, bis(fluoromethyl) carbonate, bis(difluoro)methyl carbonate, and bis(trifluoro)methyl carbonate.

Concrete examples of fluorinated ethylmethyl carbonates are 2-fluoroethylmethyl carbonate, ethylfluoromethyl carbonate, 2,2-difluoroethylmethyl carbonate, 2-fluoroethylfluoromethyl carbonate, ethyldifluoromethyl carbonate, 2,2,2-trifluoroethylmethyl carbonate, 2,2-difluoroethylfluoromethyl carbonate, 2-fluoroethyldifluoromethyl carbonate, and ethyltrifluoromethyl carbonate.

Concrete examples of fluorinated diethyl carbonates are ethyl-(2-fluoroethyl) carbonate, ethyl-(2,2-difluoroethyl) carbonate, bis(2-fluoroethyl) carbonate, ethyl-(2,2,2-trifluoroethyl) carbonate, 2,2-difluoroethyl-2'-fluoroethyl carbonate, bis(2,2-difluoroethyl) carbonate, 2,2,2-trifluoroethyl-2'-fluoroethyl carbonate, 2,2,2-trifluoroethyl-2',2'-difluoroethyl carbonate, and bis(2,2,2-trifluoroethyl) carbonate.

Concrete examples of fluorinated ethylene carbonates are monofluorinated ethylene carbonate, 4,4-difluoroethylene carbonate, and 4,5-difluoroethylene carbonate.

Concrete examples of fluorinated propylene carbonates are monofluorinated propylene carbonate, 5,5-difluoropropylene carbonate, and 4,5-difluoropropylene carbonate.

Preferably the cyclic fluorinated carbonate is monofluorinated ethylene carbonate.

In certain embodiments, the non-aqueous organic solvent composing the electrolyte solution in the lithium ion secondary battery of the present invention comprises a mixture of a linear fluorinated carbonate and a cyclic fluorinated carbonate.

According to a preferred embodiment the electrolyte (iii) further comprises at least one non-aqueous organic solvent selected from non-fluorinated carbonates. The non-fluorinated carbonates may be selected from cyclic and linear carbonates and mixtures thereof. Examples of linear carbonates are dimethyl carbonate, diethyl carbonate, dipropyl carbonate, methylpropyl carbonate, ethylpropyl carbonate and ethylmethyl carbonate. Examples of cyclic carbonates are ethylene carbonate, propylene carbonate, butylene carbonate and pentylene carbonate. Preferably the at least one non-fluorinated carbonate is selected from dimethyl carbonate, diethyl carbonate, ethylmethyl carbonate, ethylene carbonate, propylene carbonate and mixtures thereof.

The weight ratio between the fluorinated carbonates and the non-fluorinated carbonates present in said electrolyte (iii) as described above may be in the range of 1:200 to 1:1, preferably 1:100 to 1:2, more preferably 1:50 to 1:2, most preferably 1:25 to 1:3, in particular in the range of from more than 1:9 up to 1:3 by weight, respectively.

In order to obtain an electrolyte solution having desired dielectric constant and viscosity, a mixture of at least two carbonates is usually used, wherein one of said carbonates has a high dielectric constant and viscosity, and another one of said at least one solvent has a low dielectric constant and viscosity. In particular cases, such mixtures consist of a cyclic carbonate(s) and a linear carbonate(s), wherein the ratio between the cyclic and linear carbonates in the mixture is determined so as to obtain a desired dielectric constant and viscosity. Preferred cyclic carbonate(s) : linear carbonate(s) ratios are in a range of 1:1 to 1:9, e.g., 1:1, 1 ;2, 1:3, 1:4, 1:5, 1:6, 1:7, 1:8 and 1:9, respectively, by volume. Alternatively, in order to obtain an electrolyte solution having desired dielectric constant and viscosity, a sole fluorinated cyclic carbonate such as a fluorinated propylene carbonate may be used.

In certain embodiments, electrolyte (iii) in the lithium ion secondary battery of the present invention comprises (a) a mixture of a linear fluorinated carbonate and a cyclic fluorinated carbonate. In other embodiments, said non-aqueous organic solvent comprises (b) a mixture of a linear fluorinated carbonate and a cyclic non-fluorinated carbonate, and in further embodiments, said non-aqueous organic solvent comprises (c) a mixture of a linear non-fluorinated carbonate and a cyclic fluorinated carbonate.

If the electrolyte (iii) in the lithium ion secondary battery of the present invention comprises a mixture of a linear non-fluorinated carbonate and a cyclic fluorinated carbonate, the ratio between the cyclic fluorinated carbonate and the linear non-fluorinated carbonate in the electrolyte (iii) may be in a range of 1:200 to 1:1 by weight, preferably 1:100 to 1:2 by weight, more preferably 1:50 to 1:2 by weight, most preferably 1:25 to 1:3 by weight, even more preferred in the range of from more than 1:9 up to 1:3, respectively. In particular such embodiments, said cyclic fluorinated carbonate is fluoroethylene carbonate or fluoropropylene carbonate, preferably fluoroethylene carbonate.

In a preferred embodiment of the invention the electrolyte (iii) of the inventive lithium ion secondary battery comprises at least one optionally fluorinated boroxine of formula (IV) 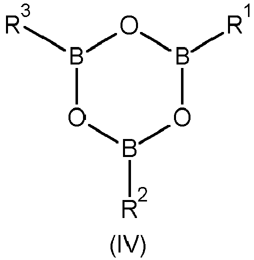 wherein R¹, R², and R³ are independently from each other are selected from (C₁-C₆)alkyl, (C₁-C₆)alkoxy, (C₅-C₇)aryl, and (C₅-C₇)aryloxy, and wherein alkyl, alkyloxy, aryl and aryloxy may be independently from each other substituted by one or more substituents selected from F, (C₁-C₆)alkyl, (C₁-C₆)alkoxy, (C₅-C₇)aryl, and (C₅-C₇)aryloxy and each alkyl, alkoxy, aryl, and aryloxy may be substituted by one or more F.

The term "(C₁-C₆)alkyl" as used herein typically means a straight or branched hydrocarbon radical having 1-6 carbon atoms and includes, e.g., methyl, ethyl, n-propyl, isopropyl, n-butyl, sec-butyl, isobutyl, tert-butyl, n-pentyl, iso-pentyl, 2,2-dimethylpropyl, n-hexyl, iso-hexyl and the like. Preferred are (C₁-C₃)alkyl groups, more preferably methyl and ethyl.

The term "(C₁-C₆)alkoxy" as used herein refers to a group of the general formula -O-(C₁-C₆)alkyl. Preferred are -O-(C₁-C₃)alkyl groups, more preferred are methoxy or ethoxy.

The term "(C₅-C₇)aryl" as used herein denotes a 5- to 7-membered aromatic cycle. A preferred (C₅-C₇)aryl is phenyl. The term "(C₅-C₇)aryloxy" as used herein means a group of the general formula -O-(C₅-C₇)aryl like phenoxy.

Examples of (C₁-C₆)alkyl substituted by one or more F are CH₂F, CHF₂, CF₃, CH₂CH₂F, CH₂CHF₂, CH₂CF₃, CHFCH₂F, CHFCHF₂, CHFCF₃, CF₂CH₂F, CF₂CHF₂, CF₂CF₃, and so on. Examples of (C₁-C₆)alkyloxy substituted by one or more F are OCH₂CH₂F, OCH₂CHF₂, OCH₂CF₃, OCH₂CH₂CH₂F, OCH₂CH₂CHF₂, OCH₂CH₂CF₃, OCH₂CHFCH₂F, OCH₂CHFCHF₂, OCH₂CHFCF₃, OCH₂CF₂CH₂F, OCH₂CF₂CHF₂, and OCH₂CF₂CF₃. Examples of (C₅-C₇)aryl substituted by one or more F are 2-, 3- and 4-mono-F-phenyl, 2,3-di-F-phenyl, 2,4-di-F-phenyl and 2,4,6-tri-F-phenyl. Examples of (C₅-C₇)aryloxy substituted by one or more F are 2-, 3- and 4-mono-F-phenoxy, 2,3-di-F-phenoxy, 2,4-di-F-phenoxy and 2,4,6-tri-F-phenoxy.

The term "optionally fluorinated boroxine of formula (IV)" as used herein means that the boroxine of formula (IV) may be substituted by one or more F. If the boroxine is substituted by one or more F, the boroxine may be partially or fully substituted by F, i.e. partially or fully fluorinated. For example, the boroxine may be substituted with 1 to 39 F, in particular with 1, 2, 3, 4, 5, 6, 7, 8, 9, 10, 11, 12, 13, 14 or 15 F.

Non-limiting examples of optionally fluorinated boroxines of formula (IV) are optionally fluorinated tri(C₁-C₆)alkyl-boroxines, optionally fluorinated tri(C₁-C₆)alkoxy-boroxines, optionally fluorinated tri(C₅-C₇)aryl-boroxines, and optionally fluorinated tri(C₅-C₇)aryloxy-boroxines.

Non-limiting examples of non-fluorinated tri(C₁-C₆)alkyl-boroxine according to the invention include, without being limited to, trimethylboroxine (TMB), triethylboroxine, tripropylboroxine, triisopropylboroxine, tributylboroxine, triisobutylboroxine, tripentylboroxine, triisopentylboroxine, trihexylboroxine, and triisohexylboroxine; and non-limiting examples of non-fluorinated tri(C₁-C₆)alkoxy-boroxine according to the invention include trimethoxyboroxine, triethyxoboroxine, tripropyloxyboroxine, triisopropyloxy boroxine, tributoxyboroxine, triisobutoxyboroxine, tripen-tyloxyboroxine, triisopentyloxyboroxine, trihexyloxyboroxine or triisohexyloxyboroxine. Non-limiting examples of fluorinated tri(C₁-C₆)alkyl-boroxines are the fluorinated derivatives of the non-fluorinated tri(C₁-C₆)alkyl-boroxines mentioned above which are substituted by 1, 2, 3, 4, 6, 7, 8, 9, 10, 11, 12, 13, 14, or 15 F like tri(monofluoromethyl)boroxine, tri(difluoromethyl)boroxine, tri(trifluoromethyl)boroxine, tri(monofluoroethyl)boroxine, tri(difluoroethyl)boroxine, tri(trifluoroethyl)boroxine, tri(tetrafluoroethyl)boroxine, tri(pentafluoroethyl)boroxine, tri(monofluoropropyl)boroxine, tri(monofluoroisopropyl)boroxine, tri(monofluorobutyl)boroxine, tri(monofluoroisbutyl)boroxine, tri(monofluoropentyl)boroxine, tri(monofluoroisopentyl)boroxine, tri(monofluorohexyl)boroxine, and tri(monofluoroisohexyl)boroxine. Non-limiting examples of fluorinated (C₁-C₆)alkoxy-boroxines are the fluorinated derivatives of the above mentioned non-fluorinated (C₁-C₆)alkoxy-boroxines which are substituted by 1, 2, 3, 4, 6, 7, 8, 9, 10, 11, 12, 13, 14, or 15 F like tri(monofluoroethyloxy)boroxine, tri(difluoroethyloxy)boroxine, tri(trifluoroethyloxy)boroxine, tri(monofluoropropyloxy)boroxine, tri(difluoropropyloxy)boroxine, tri(trifluoropropyloxy)boroxine, tri(tetrafluoropropyloxy)boroxine, tri(pentafluoropropyloxy)boroxine, tri(monofluoroisopropyloxy)boroxine, tri(monofluorobutyloxy)boroxine, tri(monofluoroisbutyloxy)boroxine, tri(monofluoropentyloxy)boroxine, tri(monofluoroisopentyloxy)boroxine, tri(monofluorohexyloxy)boroxine, and tri(monofluoroisohexyloxy)boroxine.

Non-limiting examples of non-fluorinated tri(C₅-C₇)aryl-boroxines and of tri(C₅-C₇)aryloxyboroxines are triphenylboroxine and triphenoxyboroxine, respectively. Non-limiting examples of fluorinated tri(C₅-C₇)aryl-boroxines are tri(2-F-phenyl)boroxine, tri(3-F-phenyl)boroxine, tri(4-F-phenyl)boroxine, tri(2,3-di-F-phenyl)boroxine, tri(2,4-di-F-phenyl)boroxine, and tri(2,4,6-tri-F-phenyl)boroxine, and non-limiting examples of tri(C₅-C₇)aryloxy-boroxines are, tri(2-F-phenoxy)boroxine, tri(3-F-phenoxy)boroxine, tri(4-F-phenoxy)boroxine, tri(2,3-di-F-phenoxy)boroxine, tri(2,4-di-F-phenoxy)boroxine, and tri(2,4,6-tri-F-phenoxy)boroxine.

The concentration of the optionally fluorinated boroxine of formula (IV) in electrolyte (iii) comprised in the inventive lithium ion secondary battery is usually 0.1 % to 5% by weight, based on the total wheight of the electrolyte solution, preferably 0.1 % to 2% by weight and most preferred 0.25% to 2% by weight.

In particular such embodiments, electrolyte (iii) further comprises trimethylboroxine.

Especially preferred according to the present invention are lithium ion secondary batteries comprising LiCoPO₄ as cathode active material and electrolyte (iii) comprising at least one optionally fluorinated boroxine of general formula (IV) as described above in detail including the preferred embodiments.

In further preferred embodiments of the present invention electrolyte (iii) comprises at least one compound of general formula (III) 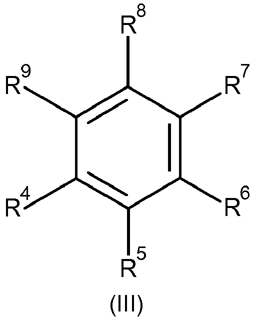 R⁴ is cyclohexyl or (hetero)aryl, which may be substituted by one or more substituent selected independently from each other from F, Cl, Br, I, and (C₁-C₆) alkyl, wherein (C₁-C₆) alkyl may be substituted by one or more substituent selected independently from each other from F, Cl, Br and I; and
R⁵, R⁶, R⁷, R⁸, and R⁹ may be same or different and are independently from each other selected from H, F, Cl, Br, I, (C₁-C₆) alkyl, wherein (C₁-C₆) alkyl may be substituted by one or more substituent selected independently from each other from F, Cl, Br and I.
The term "(C₁-C₆)" is defined as above.

"(Hetero)aryl" means (C₅-C₇) aryl or (C₅-C₇) heteroaryl. "Heteroaryl" means aryl wherein 1 to 3 C atoms are replaced independently by N, S or O. Aryl may be phenyl, heteroaryl may be furanyl or pyridyl. Preferred compounds of formula (III) are biphenyl and cyclohexylphenyl.

If a compound of general formula (III) is present in electrolyte (iii), its concentration is usually 0.01 to 5 wt.-%, based on the total weight of the electrolyte, preferably 0.1 to 2 wt.-% and most preferred 0.1 to 0.5 wt.-%.

According to particular preferred embodiments electrolyte (iii) contains at least one optionally fluorinated boroxine of formula (IV) and at least one compound of general formula (III). The concentration of the at least one optionally fluorinated boroxine of formula (IV) is usually 0.1% to 5% by weight, based on the total weight of the electrolyte solution, preferably 0.1 % to 2% by weight and most preferred 0.25% to 2% by weight and the concentration of the at least one compound of general formula (III) is usually 0.01 to 5 wt.-%, based on the total weight of the electrolyte, preferably 0.1 to 2 wt-% and most preferred 0.1 to 0.5 wt.-%.
Electrolyte (iii) comprises at least one lithium salt. The lithium salt functions as a source of lithium ions, enabling basic operations of the lithium ion secondary battery and promoting movement of lithium ions between the cathode and anode. Suited lithium salts are for example of LiPF₆, LiBF₄, LiSbF₆, LiAsF₆, LiClO₄, LiCF₃SO₃ or LiC₄F₉SO₃ and mixtures thereof. Preferably the lithium salt in electrolyte (iii) is LiPF₆. In other embodiments, said lithium salt is a mixture of LiPF₆with one or more of LiBF₄, LiSbF₆, LiAsF₆, LiClO4, LiCF₃SO₃ or LiC₄F₉SO₃ or mixtures thereof. According to the present invention, it is desirable to use a lithium salt having a low lattice energy, high dissociation degree, excellent ion conductivity, thermal stability and oxidation resistance. In addition, the concentration of the lithium salt should preferably be in the range of 0.1 to 2.0 M. When a lithium salt in a concentration less than 0.1 M is used, the conductivity of the electrolyte solution is decreased and the performance thereof may thus be degraded. On the other hand, when a lithium salt in a concentration higher than 2.0 M is used, the viscosity of the electrolyte solution is increased and the movement of the lithium ions within said solution may thus be reduced.

In certain embodiments, the lithium ion secondary battery of the present invention, in any of the configurations defined above, comprises an electrolyte comprising a solution of LiPF₆ in a non-aqueous organic solvent comprising dimethyl carbonate and mono-fluorinated ethylene carbonate.

In certain particular such embodiments, said electrolyte solution further comprises TMB, preferably wherein the amount of the TMB in said solution is 0.5% to 2% by weight.

In other particular such embodiments, the ratio between the mono-fluorinated ethylene carbonate and the dimethyl carbonate in said organic solvent is 1:4, by weight, respectively. More particular such embodiments are those wherein the ratio between the mono-fluorinated ethylene carbonate and the dimethyl carbonate in said organic solvent is 1:4, by weight, and the amount of TMB in the electrolyte solution is about 0.5% to 1 % by weight.

As shown in the examples the inventive lithium ion secondary batteries and inventive electrolyte (iii) show improved properties without the presence of vinylene carbonate. According to further embodiments of the present invention electrolyte (iii) does not contain vinylene carbonate. This means in particular no vinylene carbonate is added to electrolyte (iii). Preferably, the concentration of vinylene carbonate in electrolyte (iii) of the inventive batteries is below the detection limit of vinylene carbonate.

The inventive lithium ion secondary battery comprises an anode which comprises an anode active material selected from silicon. Silicon is able to reversibly occlude and release lithium ions. The silicon may be used in different forms, e.g. in the form of nanowires, nanotubes, nanoparticles, films, nanoporous silicon or silicon nanotubes. The silicon may be deposited on a current collector. The current collector may be a metal wire, a metal grid, a metal web, a metal sheet, a metal foil or a metal plate. Preferred the current collector is a metal foil, e.g. a copper foil. Thin films of silicon may be deposited on metal foils by any technique known to the person skilled in the art, e.g. by sputtering techniques. It is preferred that the surface densitiy of the silicon in the thin films is in the region ranging from 0.2 mg/cm² to 2 mg/cm². The thickness of the silicon thin films is preferably 0.5 µm up to 50 µm, more preferred 1 µm up to 20 µm and most preferred 1 µm up to 10 µm. One method for preparing anodes having a thin film of silicon is explicitly described in the examples. According to one embodiment of the present invention the anode comprises a thin film of silicon.

It is also possible to use a silicon/carbon composite as anode active material according to the present invention.

The anode and cathode may be made by preparing an electrode slurry composition by dispersing the electrode active material, a binder, a conductive material and a thickener, if desired, in a solvent and coating the slurry composition onto a current collector. The anode and cathode current collectors may be formed as a foil or mesh.

The lithium ion secondary battery of the present invention usually includes a separator that prevents a short between the cathode and anode. Such a separator may be made of a polymer membrane such as a polyolefin, polypropylene or polyethylene membrane, a multi-membrane thereof, a micro-porous film, or a woven or non-woven fabric.
The lithium secondary battery of the present invention may be configured in various types, such as a cylindrical, pouch or rectangular shaped battery.

A unit battery having a structure of cathode/separator/anode, a bi-cell having a structure of cathode/separator/anode/separator/cathode, or a battery stack including a plurality of unit batteries may be formed using above-described lithium secondary battery including the electrolyte, cathode, anode and separator.

As demonstrated herein, the lithium ion secondary battery of the present invention has significantly improved properties, more particularly, improved capacity retention property and faradaic efficiency.

The capacity retention of a lithium ion secondary battery is the fraction of the full capacity available from a battery under specified conditions of discharge after it has been cycled for a particular number of cycles. The faradaic/coulomb efficiency of a lithium ion secondary battery is the ratio of discharge capacity: charge capacity, expressed in percents and calculated according to the formula measured as [(discharge capacity/charge capacity)×100]. The term "improving the capacity retention property and faradaic efficiency of a lithium ion secondary battery" as used herein thus means that during the cycling the battery retains more portion of its discharge (faradaic) capacity and, at the same time, less charge is expended in parasitic reactions.

A further object of the present invention is the use of electrolyte (iii) in lithium ion secondary batteries comprising an anode active material selected from silicon, preferably in lithium ion secondary batteries comprising an anode active material selected from silicon and a cathode comprising a cathode active material that can reversibly occlude and release lithium ions wherein the upper cut-off voltage for the cathode during charging against Li/Li⁺ is of at least 4.4 V, preferably of at least 4.5 V, more preferred of at least 4.6 V, even more preferred of at least 4.7 V and most preferred of at least 4.8 V. The use of electrolyte (iii) in lithium ion secondary batteries comprising an anode active material selected from silicon and a cathode comprising a cathode active material selected from the preferred cathode active materials described above is especially preferred.

In another aspect, the present invention relates to a method of using the electrolyte (iii) and improving the capacity retention property and faradaic efficiency of a lithium ion secondary battery, said method comprising placing electrolyte (iii) comprising at least one lithium salt, and at least one fluorinated carbonate and optionally further components as described above for electrolyte (iii) into a lithium ion secondary battery comprising an anode active material selected from silicon and a cathode comprising a cathode active material that can reversibly occlude and release lithium ions wherein the upper cut-off voltage for the cathode during charging against Li/Li⁺ is of at least 4.4 V, preferably of at least 4.5 V, more preferred of at least 4.6 V, even more preferred of at least 4.7 V and most preferred of at least 4.8 V. Electrolyte (iii) placed into said battery may comprise further additives and features as described above. In this respect the present invention relates to a method of improving the capacity retention property and faradaic efficiency of a lithium ion secondary battery, said method comprising placing electrolyte (iii) as described above into a lithium ion secondary battery comprising an anode active material selected from silicon and a cathode comprising a cathode active material that can reversibly occlude and release lithium ions wherein the upper cut-off voltage for the cathode during charging against Li/Li⁺ is of at least 4.4 V, preferably of at least 4.5 V, more preferred of at least 4.6 V, even more preferred of at least 4.7 V and most preferred of at least 4.8 V. The term "placing the electrolyte into a lithium ion secondary battery" is intended to include all techniques to place, insert or apply the electrolyte in or to the lithium secondary battery known to the person skilled in the art like injecting the electrolyte into the assembled battery or immersing one or more components of the cell like anode, cathode or separator in the electrolyte solution before assembling of the battery.

The invention will now be illustrated by the following non-limiting examples.

### 6. EXAMPLES

### Anode:

Silicon thin film electrodes were prepared by DC magnetron sputtering (Angstrom Sciences Inc., USA) of n-type silicon (99.999%, Kurt J. Lesker, USA), at a pressure of about 5×10⁻³ Torr of argon (99.9995%) onto the roughened copper foil (Oxygenfree, SE-Cu58, Schlenk Metallfolien GmbH & Co. KG) as described in R. Elazari, et al.; Electrochem. Comm. 2012, 14 , 21-24. The surface density of the obtained Si film was 0.39 mg/cm² (∼1.8 µm thick), if not stated differently. Before the use of the film Si electrodes as anodes in full cells, they were galvanostatically pre-passivated and partially pre-lithiated in two electrode coin type cells containing Li counter electrodes. Two-electrode cells comprising silicon film electrodes, PE separator (Setela Tonen, Japan), an electrolyte solution, and Li counter electrodes were assembled in a glove box filled with pure argon and sealed in 2032 coin-cells (NRC, Canada). After that five galvanostatic cycles of Si electrodes were performed with the voltage cut-off limits of 10 mV and 1.2 V and current density of 120 mA/g in the first cycle and 600 mA/g in four subsequent cycles. Finally, the Si electrodes were discharged galvanostatically down to 50 mV vs. Li/Li⁺, withdrawn from Si/Li cells in the glove box and used for the preparation of the complete cells. SEM images of the Si anode were obtained by FEI Inspec S. An example is shown in Fig. 1a displaying a columnar structure with increased diameter. A Raman spectrum of the Si anode was measured using a Raman microscope spectrometer (Labram, HR-800/Jobin Yvon Horiba) with a 632.8 nm line of a He-Ne laser with a power attenuated to 0.1 mWat the samples' surface. The result is shown in Fig. 1 b revealing the absence of the peak at 520 cm⁻¹, which is characteristic of crystalline silicon. Thus, it may be concluded that the Si film is totally amorphous.

### Cathodes:

LiNi_{0.5}Mn_{1.5}O₄ powder was obtained from LG Chem. Composite electrodes comprised 90 wt % of LiNi_{0.5}Mn_{1.5}O₄, 5 wt % of carbon black (SuperP, Superior graphite, USA) and 5 wt % of PVdF (Aldrich). The cathode sheets were fabricated by spreading the slurry (suspension of LiNi_{0.5}Mn_{1.5}O₄ powder and carbon black in a PVdF/N-methylpyrrolidon solution) on an aluminum foil current collectors with a doctor blade device. Typically, the electrodes contained 4.2±0.2 mg of active mass.

Carbon-coated LiCoPO4 powder was prepared by hydrothermal synthesis as describen in Markevich et al., Electrochem. Comm., 2012, 15, 22-25, and had an orthorhombic, olivine-like structure SEM image and XRD pattern of the carbon-coated LiCoPO₄ olivine powder prepared, showed that the powder consisted of rods having a diameter of 50 to 200 nm and a length of about 1 µm.

The carbon content in the powder was determined by an Eager, Inc. Model 200 analyzer and comprised 1.53 % by weight. The surface area of a sample of the powder prepared was calculated using the Brunauer-Emmett-Teller (BET) equation from the adsorption isotherm of N₂ gas at 77 K using an Autosorb-1-MP apparatus (Quantachrome Corporation), and was equal to 11.7 m²/g. The cathode sheets were fabricated by spreading a slurry (a suspension of LiCoPO₄ powder and carbon black in a PVdF/N-methylpyrrolidon) on an aluminum foil current collector with a doctor blade device. Typically, the electrodes contained 2-3 mg of active mass.

### Electrolytes:

The electrolyte solutions were 1 M of LiPF₆ in an EC + DMC 1:1 (EC-based) mixture and 1 M of LiPF₆ in a FEC + DMC 1:4 (FEC-based) mixture (both Li-battery grade from Merck, KGaA). FEC means monofluorinated ethylene carbonate.

### Cell assembling and measurement devices:

Two-electrode cells comprising LiNi_{0.5}Mn_{1.5}O₄ or LiCoPO₄ cathodes, respectively, PE separator, an electrolyte solution, and preliminary passivated and partially lithiated silicon film negative electrodes were assembled in a glove box and sealed in coin-cells. Galvanostatic cycling of Si/Li cells (pre-passivation procedure), LiCoPO₄/Si cells and LiNi_{0.5}Mn_{1.5}O₄/Si cells was carried out using an Arbin model BT2000 battery tester (Arbin Instruments, USA).

### Example 1 (LiNi_{0.5}Mn_{1.5}O₄/Si cell with EC-based electrolyte, comparative):

The lithium ion secondary cell of example 1 comprised a LiNi_{0.5}Mn_{1.5}O₄ cathode and a Si anode as described above. The electrolyte solution used was the above described EC-based electrolyte. The charge and discharge capacities during cycling at C/8 at 30 °C are shown in Fig. 2 (open and full circles; x-axis: number of cycles; y-axis: capacity [mAh/g])). A stable cycling was observed typically during 20-30 initial cycles. After that a sudden increase in the irreversible capacity with a drastic growth of the charge capacity value and decrease in discharge capacity was observed. Obviously, at this point the rate of side parasitic reactions on the electrodes becomes comparable or even higher than that of Faradaic process and, finally, this leads to the failure of the cells.

### Example 2 (LiNi_{0.5}Mn_{1.5}O₄/Si cell with FC-based electrolyte, inventive):

The lithium ion secondary cell of example 2 comprised a LiNi_{0.5}Mn_{1.5}O₄ cathode and a Si anode as described above. The electrolyte solution used was the FEC-based electrolyte described above. The charge and discharge capacities during cycling at C/8 at 30 °C are shown in Fig. 2 (open and full triangles; x-axis: number of cycles; y-axis: capacity [mAh/g]). The cells showed a very stable cycling with charge-discharge efficiency approaching 100%.

### Example 3 (LiNi_{0.5}Mn_{1.5}O₄/Si cell with EC-based electrolyte, comparative):

A cell as described in example 1 was galvanostatically cycled at different current rates at 30 °C. The first 10 cycles were done at C/8, cycles 11 to 20 at C/4, cycles 21 to 30 at C/2, cycles 31 to 40 at 1C, cycles 41 to 50 at 2C and all cycles after at C/8. The charge and discharge capacities are shown in Fig. 3 (open and full circles; x-axis: number of cycles; y-axis: capacity [mAh/g]). It is not surprising that it is possible to perform more charge-discharge cycles, since in this case the portion of the charge, which relates to the side reactions on the electrodes, is relatively smaller than that of coulombic charge associated with the reversible Li doping-undoping into the structure of the electrodes. One can observe the typical behavior of the cells failure after the return to the C/8 current rate.

### Example 4 (LiNi_{0.5}Mn_{1.5}O₄/Si cell with FC-based electrolyte, inventive):

A cell as described in example 2 was galvanostatically cycled at 30 °C according to the same protocol as described in example 3. The charge and discharge capacities are shown in Fig. 3 (open and full triangles; x-axis: number of cycles; y-axis: capacity [mAh/g]). In contrast to the cells cycled with EC-based electrolyte it can be seen, that FEC-containing electrolyte ensures higher rate capability of the cells and longer life time of the cell. Charge/discharge voltage profiles of LiNi_{0.5}Mn_{1.5}O₄ /Si cells measured at current rates of C/8 (Fig. 4a), C/2 (Fig. 4b) and 2C (Fig. 4c) in 1 M LiPF₆/FEC-DMC solution are shown in Figure 4a to c (x-axis: capacity [mAh/g]; y-axis: cell voltage [V]). For every current rate the data of the first and last cycle at the respective current rate is displayed.

### Example 5 (LiCoPO₄/Si cells in FEC-based electrolyte with and without TMB (inventive)):

Cycling results of LiCoPO₄/Si cells in two electrolyte solutions are shown in Fig. 5. The galvanostatic cycling was performed at C/8 h rate at 30 °C. Electrolyte solution compositions were 1 M LiPF₆/FEC-DMC 1:4 without TMB (open circles) and with the addition of 1 wt.-% TMB (full circles). As can be seen the addition of TMB to an FEC-based electrolyte solution leads to a higher capacity of the cell.

### Example 6 (LiNi_{0.5}Mn_{1.5}O₄/Si cell with EC- based electrolyte (comparative) and FC-based electrolyte (inventive)):

Cells as described in example 1 and 2 with the difference that the surface density of the Si-film on the anode was 1.3 mg/cm² and thickness of the Si-film was about 6 µm, respectively, were galvanostatically cycled at C/8 at 30 °C. The charge and discharge capacities are shown in Fig. 6. The charge and discharge capacity versus the cycle number of the cell comprising the EC-based electrolyte (comparative) are displayed as full and open triangles. The charge and discharge capacity versus the cycle number of the cell comprising the FEC-based electrolyte (inventive) are displayed as full and open circles. The x-axis denotes the number of cycles; the y-axis shows the capacity [mAh/g].

## Claims

1. A lithium ion secondary battery comprising:
(i) a cathode comprising a cathode active material that can reversibly occlude and release lithium ions wherein the upper cut-off voltage for the cathode during charging against Li/Li⁺ is of at least 4.4 V, preferably of at least 4.5 V and more preferred of at least 4.6 V;
(ii) an anode comprising an anode active material selected from silicon; and
(iii) a non-aqueous electrolyte comprising at least one lithium salt and at least one non-aqueous organic solvent selected from fluorinated carbonates.

2. The battery of claim 1, wherein said cathode active material is selected from materials which allow during discharge at a rate of C/20 to use at least 50 % of the capacity of the lithium ion secondary battery at a voltage against Li/Li⁺ of at least 4.2 V, preferably of at least 4.3 V and more preferred of at least 4.4 V.

3. The battery of claim 1, wherein said cathode active material is selected from transition metal oxides with layer structure having the general formula (I) Li_{(1+y)}[NiₐCo_{b}Mn_{c}]_{(1-y)}O₂₊ₑ wherein y is 0 to 0.3; a, b and c may be same or different and are independently 0 to 0.8 wherein a + b + c = 1; and -0.1 ≤ e ≤ 0.1.

4. The battery of claim 1 or 2, wherein said cathode active material is selected from manganese-containing spinels of general formula (II) Li₁₊ₜM₂₋ₜO_{4-d} wherein d is 0 to 0.4, t is 0 to 0.4 and M is Mn and at least one further metal selected from the group consisting of Co and Ni.

5. The battery of claim 1 or 2, wherein said cathode active material is selected from LiCoPO₄.

6. The battery of any one of claims 1 to 5, wherein said electrolyte (iii) further comprises at least one non-fluorinated carbonate.

7. The battery of claim 6, wherein the weight ratio between the fluorinated carbonates and the non-fluorinated carbonates present in said electrolyte (iii) is in the range of 1:200 to 1:1, preferably 1:100 to 1:2, more preferably 1:50 to 1:2, most preferably 1:25 to 1:3, in particular in the range of from more than 1:9 up to 1: 3 by weight, respectively.

8. The battery of any one of claims 1 to 7, wherein the electrolyte (iii) further comprises at least one compound of general formula (III) 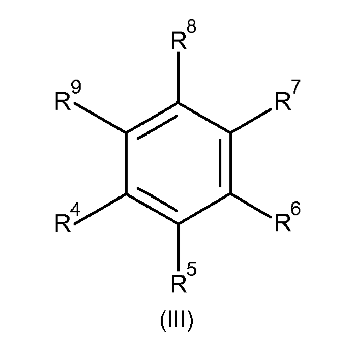 R⁴ is cyclohexyl or aryl, which may be substituted by one or more substituent selected independently from each other from F, Cl, Br, I, and (C₁-C₆) alkyl, wherein (C₁-C₆) alkyl may be substituted by one or more substituent selected independently from each other from F, Cl, Br and I; and
R⁵, R⁶, R⁷, R⁸, and R⁹ may be same or different and are independently from each other selected from H, F, Cl, Br, I, (C₁-C₆) alkyl, wherein (C₁-C₆) alkyl may be substituted by one or more substituent selected independently from each other from F, Cl, Br and I.

9. The battery of claim 8, wherein the concentration of the compound of formula (III) in the electrolyte (iii) is 0.01 to 5 wt.-%, based on the total weight of the electrolyte, preferably 0.1 to 2 wt.-% and most preferred 0.1 to 0.5 wt.-%.

10. The battery of any one of claim 1 to 9, wherein the lithium salt in the electrolyte (iii) is LiPF₆, or a mixture of LiPF₆ with LiBF₄, LiSbF₆, LiAsF₆, LiClO₄, LiCF₃SO₃, LiC₄F₉SO₃ or mixtures thereof.

11. The battery of any of claims 5 to 10 wherein the cathode active material is selected from LiCoPO₄ and the electrolyte (iii) further comprises at least one optionally fluorinated boroxine of formula (IV) 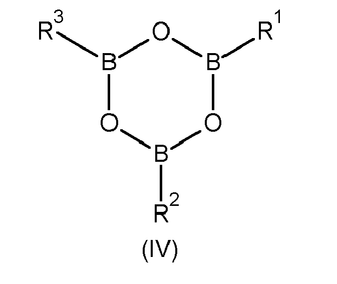 wherein R¹, R², and R³ are independently from each other are selected from (C₁-C₆)alkyl, (C₁-C₆)alkoxy, (C₅-C₇)aryl, and (C₅-C₇)aryloxy, and
wherein alkyl, alkyloxy, aryl and aryloxy may be independently from each other substituted by one or more substituents selected from F, (C₁-C₆)alkyl, (C₁-C₆)alkoxy, (C₅-C₇)aryl, and (C₅-C₇)aryloxy and
each alkyl, alkoxy, aryl, and aryloxy may be substituted by one or more F.

12. The battery of claim 11, wherein the concentration of the optionally fluorinated boroxine of formula (IV) in said electrolyte (iii) is 0.1 % to 5% by weight, based on the total weight of the electrolyte, preferably 0.1 to 2 wt.-% and most preferred 0.25 to 2 wt.-%.

13. The battery of claim 11 or 12 wherein the electrolyte (iii) comprises at least one optionally fluorinated boroxine of formula (IV) and at least one compound of general formula (III).

14. Use of electrolyte (iii) as defined in any of claims 1 and 6 to 13 as electrolyte in lithium ion secondary batteries comprising an anode active material selected from silicon.
